# EUROPEAN PATENT SPECIFICATION

(11) **EP 3 718 256 B1**
(45) Date of publication and mention of the grant of the patent: **09.02.2022**
(21) Application number: 18815962.8
(22) Date of filing: 28.11.2018
(51) Int. Cl.: H04L 12/24, H04W 28/24

(54) **TARGET AREA INDICATION**
ZIELBEREICHSANZEIGE
INDICATION DE ZONE CIBLE

(30) Priority: 28.11.2017 US 201762591306 P
(43) Date of publication of application: 07.10.2020
(73) Proprietor: Telefonaktiebolaget LM Ericsson (publ), 164 83 Stockholm (SE)
(72) Inventor: JOHANSSON, Nicklas, 590 45 Brokind (SE); EKLÖF, Cecilia, 187 41 Täby (SE); PETERSEN, Robert, 582 46 Linköping (SE); MONRAD, Atle, 4820 Froland (NO)
(74) Representative: Ericsson
(86) International application number: PCT/EP2018/082909
(87) International publication number: WO 2019/106055

(56) References cited:
- ERICSSON: "Start and stop of QoE Measurements", 3GPP DRAFT; R2-1710506 START AND STOP OF MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 8 October 2017 (2017-10-08), XP051342549, Retrieved from the Internet: URL:http://www.3gpp.org/ftp/Meetings_3GPP_ SYNC/RAN2/Docs/ [retrieved on 2017-10-08]
- ERICSSON: "Attributes for QoE measurement collection", 3GPP DRAFT; S5-176274 ATTRIBUTE DEFINITIONS FOR QOE MEASUREMENT COLLECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. SA WG5, no. Reno, USA; 20171127 - 20171201 17 November 2017 (2017-11-17), XP051381253, Retrieved from the Internet: URL:http://www.3gpp.org/ftp/tsg%5Fsa/WG5%5 FTM/TSGS5%5F116/Docs/ [retrieved on 2017-11-17] cited in the application
- ERICSSON: "AT-commands for application level measurement reporting", 3GPP DRAFT; C1-174682_WAS-4243_APPLICATION-LEVEL_MEASU REMENT_REPORTING-V16, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. CT WG1, no. Reno (USA); 20171127 - 20171201 18 November 2017 (2017-11-18), XP051367383, Retrieved from the Internet: URL:http://www.3gpp.org/ftp/tsg%5Fct/WG1%5 Fmm%2Dcc%2Dsm%5Fex%2DCN1/TSGC1%5F107%5FRen o/docs/ [retrieved on 2017-11-18] cited in the application
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD ; TECHNICAL SPECIFICATION ; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.4.0, 25 September 2017 (2017-09-25), pages 1-329, XP051337303, [retrieved on 2017-09-25]

## Description

### Technical field

This invention is directed to methods and apparatus involving handling Quality of Experience, QoE, for Long Term Evolution, LTE, and New Radio (5G) systems.

### Background

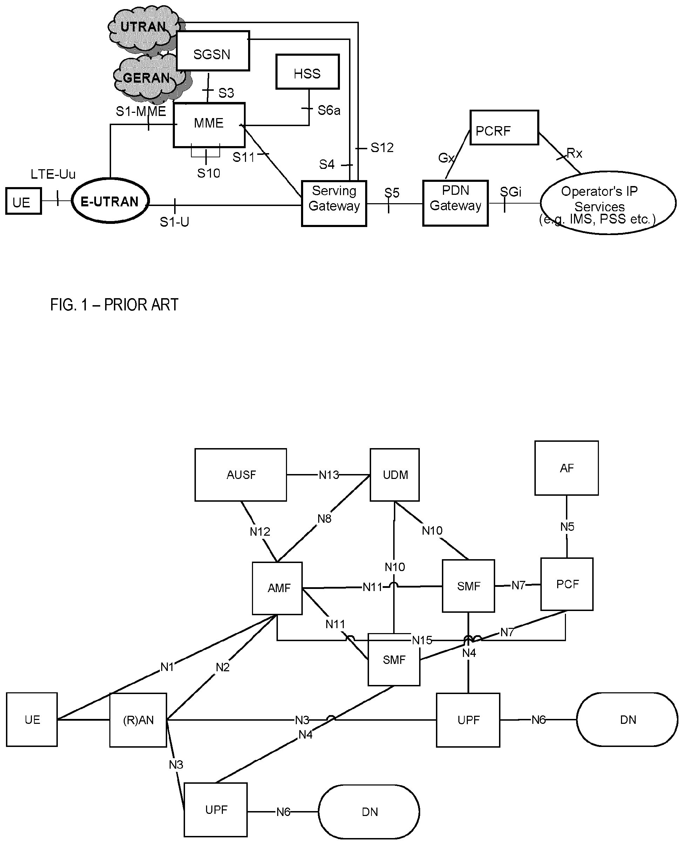

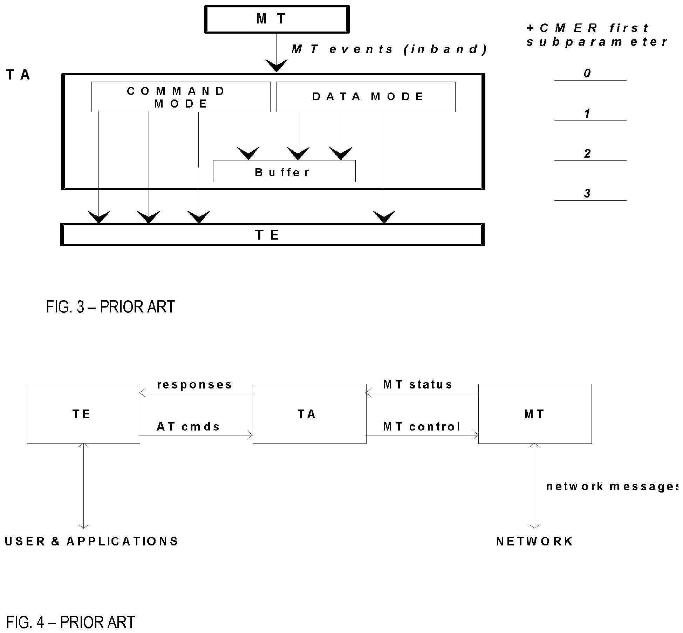

3GPP 27.007 V14.5.0 (2017-09) - (Release 14) - describes AT command set for User Equipment (UE). This document specifies a profile of AT commands and recommends that this profile be used for controlling Mobile Termination (MT) functions and GSM/UMTS network services from a Terminal Equipment (TE) through Terminal Adaptor (TA). AT ATtention; this two-character abbreviation is always used to start a command line to be sent from TE (Terminal Equipment) to TA (Terminal Adaptor). Fig. 4 (corresponding to 27.007 V14.5.0 (2017-09), Figure 1) shows the TA, TE and MT (Mobile Terminal) interfacing to user applications and network.

3GPP TS 28.404 V0.1.0 (2017-08-29) pertain to Quality of Experience, QoE, measurement collection; Concepts, use cases and requirements. According to this document a network request session is a session in the mobile network when the network checks for UEs that have the capability to provide requested information. An UE (User Entity) request session is a session in the network when the network has found an UE that has the capability to provide the requested information and the request is forwarded to the UE. A recording session is a session in the UE when it initiates recording of the requested end user service/end user service type and record the requested information. The collection of QoE information for a specified end user service/end user service type either from UEs in a specified area or a specific UE. The collected information is transported to a collection centre, where it can be analysed and/or KPIs () can be calculated.

A collection can be requested by an operator technician via the management system to the traffic network. As the network does not have any knowledge which UEs have the capability to record the requested data, the UEs will report whether they have this capability or not when a session set up. UEs that has this capability that match the request from the management system will be requested to start recording the requested information when the request constraints are met. The UE will make the recorded data available for management system.

A corresponding work item exists for LTE and this feature may later also applicable for NR. The purpose of the work item is to start measurements in the UE to collect information about the quality of streaming services used in the UE. The streaming service is typically a 3rd party streaming application on top of a PS (Packet Service) Interactive RAB (Radio Access Bearer) defined in RAN (Radio Access Node). The purpose of the measurement collection is to be able to improve the quality of the streaming service.

The measurements may be initiated towards RAN on a management basis, i.e. from an OAM (Operation and Maintenance) node in generic way for a group of UEs, or they may also be initiated on signalling basis, i.e. initiated from O&M node via the CN (Core Network) to RAN. The configuration of the measurement includes the measurement details, which are encapsulated in a container that is transparent to RAN. In this context it should be mentioned that there is an ongoing discussion regarding which attributes that shall be inside the container and which ones need to be outside so that intermediate nodes and layers may make use of the parameters/attributes, see S5-176274.

The trigger to perform QoE measurement collection is done using RRC (Radio Resource Control) signalling wherein the configuration to perform QoE measurements is provided to the UE in a container, see R2-1712073. The container is then forwarded to the application layer using relevant AT commands, see C1-174682. The RAN is not aware of when the streaming session is ongoing in the UE and is also not aware of when the measurements are ongoing.

It is important for the client analysing the measurements that the whole session is measured even if the UE move outside the targeted area. It is also important to be able to stop the measurement reporting in case of e.g. overload conditions in the RAN. Here it should be noted that it has been proposed to introduce means to stop reporting via the <start-stop_reporting> IE (Information Element) which implies an immediate stop to do application reporting, see C1-174682.

In R2-1710506 it has furthermore been proposed to provide information to the UE in RRC signalling if cells are within the targeted area or not. The reason for adding the indication is that the UE may move to another cell before the session starts. To this end, it has been proposed to add to the X2 application protocol means to convey the targeted area, see R3-174585 from the source RAN to the target RAN node so that the eNB may via the RRC signalling notify if the UE is currently within the targeted area or not.

In summary, there is no consensus on whether the container shall include the targeted area or not as per the current TS 26.247 or if the approach to simply indicate if cells are within the area or not as proposed in R2-1710506 and R3-174585.

In R2-1710506 the (source) eNB receives an area where QoE measurements should be performed, either from the core network or from OAM. The area is defined as either a list of cells, tracking areas or PLMN. If the area is received from the core network the area is applicable for a specific UE, whereas it applies to all UEs within the area if received from OAM. In both cases the eNB will start the measurements on a per UE basis. Actually, eNB cannot start the measurements as they are started in the UE when the streaming session starts in the application layer, but eNB enables the start of the measurements, i.e. the measurements are not started until eNB has enabled the start of the measurements. The eNB enables the start of the measurements in the UE when it enters the specified area and after that the UE can perform QoE measurements and send reports.

In R2-1710506 it is proposed to provide information to the UE in RRC signalling if QoE reporting is allowed and if the cell is within the measured area. Concerning mobility, it is suggested that the QoE measurements should continue in the target eNB. The source eNB sends the configuration information, e.g. the specified area to the new eNB. At handover, the target eNB builds the handover message which is sent to the UE. The target eNB can include information in the message to the UE that QoE reporting is allowed and that the cell is within the measured area.

The features found in common with R2-1710506 have been denoted in the preamble of the respective independent claims.

Currently, only QoE measurements for streaming services have been included in the specifications, but in later releases other type of application layer measurements may be added. Thus, while the text and figures in this document mostly describe QoE-related measurements, the concept as such is valid for any type of application layer measurements.
Fig. 1 (corresponding to 3GPP TS 23.401 V15.1.0 (2017-09) - Figure 4.2.1-1: Non-roaming architecture for 3GPP accesses) shows a known SA-LTE reference architecture showing moreover a UE, e Node B, MME and SGW.
Fig. 2 (corresponding to TS 23.501 V0.5.0 (2017-05), Figure 4.2.3-3: Applying non-roaming 5G System architecture for multiple PDU session in reference point representation) discloses a known 5G core network reference architecture.
Fig. 3 (corresponding to 8, C1-174682) shows a known model of a Mobile Terminal (MT), a Terminal Application (TA) and a Terminal Entity (TE).

### Summary

The inventors have discovered the unrecognized problem with known solutions that the application layer in the UE may not be aware if the UE is within or outside the targeted area or not. The present invention is defined by the appended claims.

It is an object of the invention to set forth methods and apparatuses that can alleviate the above shortcoming.

This object has among others been achieved by a method for a system comprising a Quality of Experience, QoE, entity area data structure; an Operation and Maintenance, OaM, entity area data structure; a source and a target Radio Access Node, S-RAN; T-RAN, area data structure area data structure and a User Equipment, UE area data structure; the method comprising - using an area data structure area data structure indicating to an application whether the UE is either inside or outside a targeted area, TA, of the application level measurement reporting for the application indicated by an application measure service type information element area data structure.

The object has also been achieved by a method for a Radio Access Node, RAN area data structure, denoted source RAN, S-RAN, adapted for interacting with an Operations and Maintenance, OAM, entity, area data structure, another RAN, denoted target RAN area data structure, T-RAN, and a User Entity, UE comprising an UE Access Stratum area data structure and a UE application level area data structure, wherein - receiving area data structure a QoE job request message from the OAM, comprising a targeted area, TA, and a Container element with a measurement configuration file, - transmitting area data structure a Radio Resource Control RRC message including SET-UP information and a QoE data structure to the UE access stratum area data structure, the OoE data structure comprising an Area data structure area data structure and a Container element, allowing the UE access stratum to forward the Area Data Structure and the container to the UE application level area data structure, - taking part in a handover procedure and issuing area data structure a Handover Request message comprising the targeted Area to the target RAN area data structure, - receiving a Handover Request Acknowledge message comprising an updated value of the area data structure from the target RAN, - transmitting area data structure a RRC_Connection_Reconfiguration_Request message with the updated value of the area data structure to the UE access stratum area data structure, - allowing the UE access stratum area data structure to forward an AT command to the UE application level area data structure to start a QoE measurement recording session as specified in the measurement configuration file if the UE is within the targeted Area, TA, and for preparing a QoE report.

The above object has further been achieved by a Method for a Radio Access Node, RAN area data structure, denoted target RAN, T-RAN, adapted for interacting with an QoE collection entity, area data structure, another RAN, denoted source RAN area data structure, and a User Entity, UE comprising an UE Access Stratum area data structure and a UE application level area data structure, wherein - upon receiving area data structure from the UE Access Stratum a RRC_Connection_Reconfiguration_Complete message area data structure, - upon receiving area data structure a QoE report from the UE application level area data structure via area data structure the UE access stratum area data structure; - forwarding area data structure the QoE report to the QoE Collection, entity, area data structure.

Further, a method User Entity, UE, comprising a UE Access Stratum area data structure and a UE application level area data structure, the UE being adapted for - conveying a first AT command area data structure comprising an area data structure area data structure indicating to an application whether the UE is either inside or outside a targeted area, TA, of the application level measurement reporting for the application indicated by an application measure service type information element area data structure from the UE Access Stratum area data structure to the UE application level area data structure archives the object set out above.

Moreover, various apparatuses are defined.

### Brief description of the drawings

- Fig. 1: shows a known SA-LTE reference architecture showing moreover a UE, e Node B, MME and SGW,
- fig. 2: discloses a known 5G core network reference architecture,
- fig. 3: shows a known model of a Mobile Terminal (MT), a Terminal Application (TA) and a Terminal Entity (TE),
- fig. 4: shows a TE, TA and MT and interfaces to user and applications and interface to network

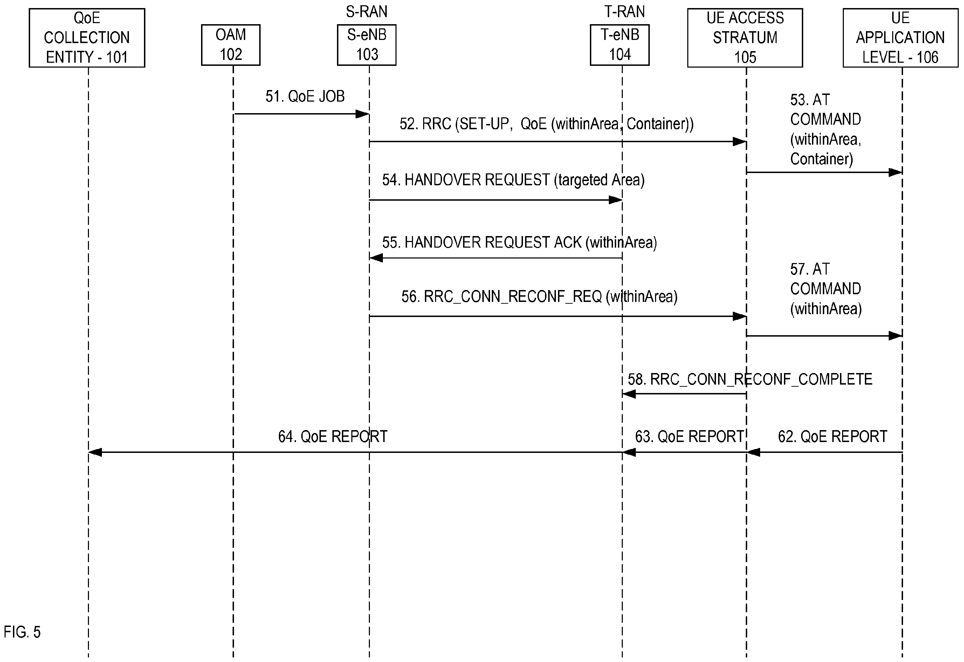

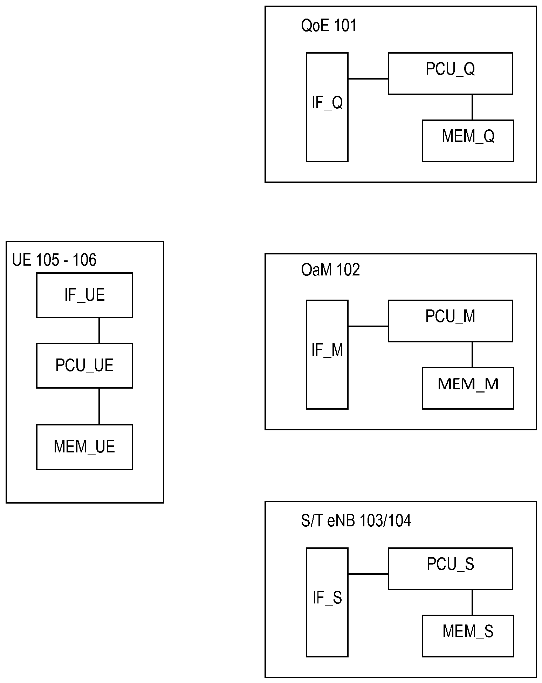

- fig. 5: shows an exemplary signalling flow according to an embodiment of the invention,
- fig. 6: shows various nodes according an embodiment of the invention,

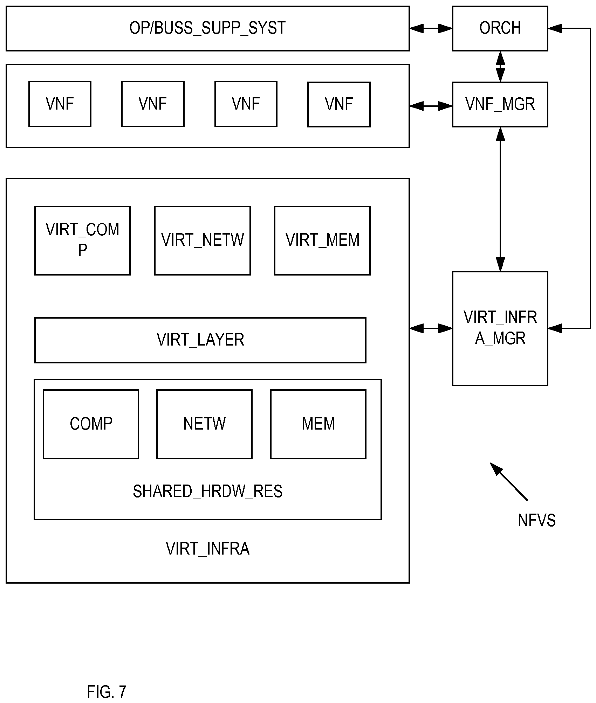

- fig. 7: shows an alternative embodiment for implementing the invention, and

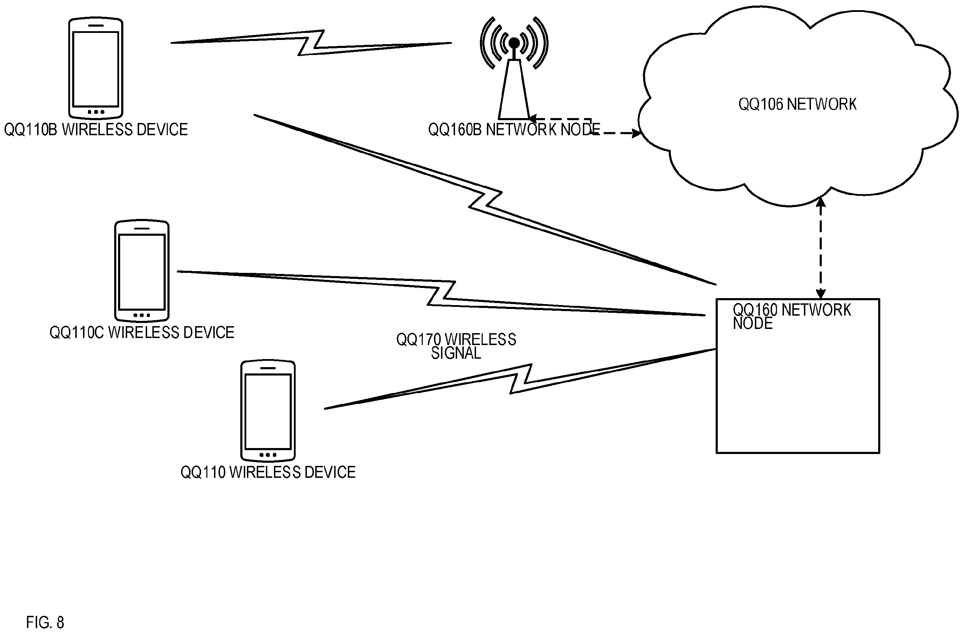

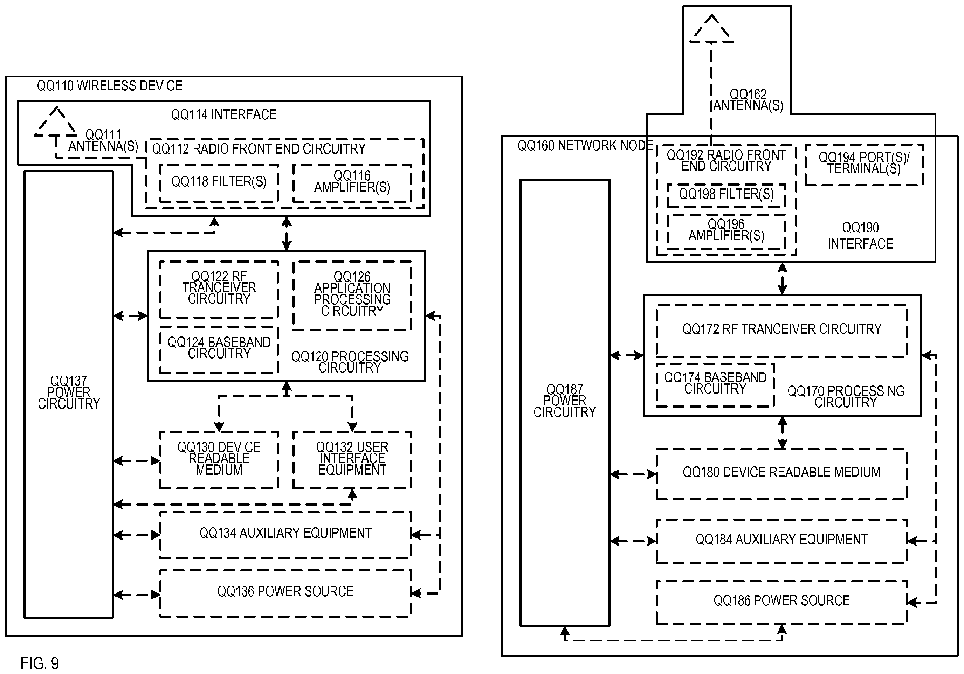

- fig. 8 + 9: show a wireless network according to embodiments of the invention.

### Detailed description

According to embodiments of the invention the notion Target Area is used. The Target Area indicates within which the UE shall start QoE measurements when a session for a requested service type is started.

The targeted Area may be defined as one of a: Single cell or list of cells; Tracking Area, PLMN (Public Land Mobile Network). According to aspects of the invention an addition to an indication in relevant AT commands is provided indicating that the UE is within a targeted area or not.

The application in the UE will know when the UE is within the targeted area or not. This will in turn lead to lower processing requirements in the UE and thus lower battery consumption as well as to lower interference in the network by avoiding sending of unsolicited reports.

In a first non-claimed embodiment, in order to achieve the objective, i.e. to ensure that the application layer is aware if the UE is within the area or not it is proposed to enhance relevant AT commands with means to indicate if the UE currently is within in the allowed area or not, see e.g. below were the proposed +CAPPLEVMC, see C1-174682 (Relating to 3GPP TS 27.007 V14.5.0), command is enhanced :
5.1 8.78 Application level measurement configuration +CAPPLEVMC

**Table 8.78-1: +CAPPLEVMC parameter command syntax**

| **Command** | **Possible response(s)** |
|---|---|
| +CAPPLEVMC=[<n>] | *+CME ERROR: <err>* |
| +CAPPLEVMC? | +CAPPLEVMC: <n> |
| +CAPPLEVMC=? | +CAPPLEVMC: (**list of supported** <n>**s**) |

This command allows control of the application level measurement configuration according to 3GPP TS 25.331 V15.0.0 (2017-09) Radio Resource Control (RRC); Protocol specification and 3GPP TS 36.331 V14.4.0 (2017-09) Evolved Universal Terrestrial Radio Access (E-UTRA); Radio Resource Control (RRC); Protocol specification. The set command controls the presentation of the unsolicited result code +CAPPLEVMC: <app-meas_service_type>,<start-stop_reporting>, <WithinAREA>, [,<app-meas_config_file_length>,<app-meas_config-file>] providing data for the configuration. Refer subclause 9.2 for possible <err> values.

```
 Read command returns the current value of <n>.
 Test command returns values supported as a compound value.
 Defined values
 <n>: integer type. Disable and enable presentation of the unsolicited result code +CAP-
 PLEVMC to the TE (Terminal Equipment).
 0 Disable presentation of the unsolicited result code
 1 Enable presentation of the unsolicited result code
 <app-meas_service_type>: integer type. Contains the indication of what application that is
 target for the application level measurement configuration.
 <start-stop_reporting>: integer type. Indicates the start and stop of the application level
 measurement reporting for the application indicated by the <app-meas_service_type>.
 0 start the application level measurement reporting
 1 stop the application level measurement reporting
 <WithinAREA>: integer type. Indicates to the application if the UE is within the targeted area
 of the application level measurement reporting for the application indicated by the <app-
 meas service type>.
 0 Outside the targeted area
 1 Inside the targeted area.
 <app-meas_config_file_length>: integer type. Indicates the number of octets of the <app-
 meas_config-file> parameter.
 <app-meas_config-file>: string of octets. Contains the application level measurement config-
 uration file for the application indicated by the <app-meas_service_type>. The parameter
 shall not be subject to conventional character conversion as per +CSCS.
```

In fig. 5, an embodiment of the invention is disclosed in which an area data structure denoted withinArea is used in a scenario in which a UE 105/106 is handover from a source to a target Radio Access Node such as a source to a target eNodeB, (S/T eNB) 103/104.

Source eNB 103 to a target eNB 104.

In step 51, an Operation and Maintenance, OAM, entity, 102, issues 51 a QoE job request to a source eNodeB, S-eNB, 103 including targeted area and container with measurement configuration file.

The S-eNB 103 transmits 52 a Radio Resource Control RRC message including SET-UP information and a QoE data structure to a UE access stratum 105. The QoE data structure comprises the element withinArea mentioned above and element Container. In other words, S-eNB triggers via RRC signalling a QoE Measurement collection and includes container with configuration file and indicates if within the targeted area.

The UE Access Stratum in turn provides 53 a UE application level or layer 106 with AT Command comprising withinArea and Container.

The S-eNB 103 takes part in a handover procedure and issues 54 a Handover Request message comprising an information element targeted Area to the T-eNB 104, which replies 55 with a Handover Request Acknowledge message comprising an updated value of withinArea.

The S-eNB now transmits a RRC_Connection_Reconfiguration_Request message 56 with the updated value of withinArea to the UE access stratum 105. The UE access stratum issues a new AT command 57 comprising the updated value of withinArea to the UE application level 106. The UE Access Stratum responds to the T-NB 58 with a RRC_Connection_Reconfiguration_Complete message 58.

When the streaming session starts and if the withinArea indication indicates that the UE is within the targeted area the UE starts a QoE measurement recording session as specified in the configuration file.

The procedure finishes by the UE application level 106 issues 62 a QoE report to the UE access stratum. The QoE report is forwarded 63 to the T-eNB 104 and further 64 to a QoE collection entity 101.

In fig. 6, there is shown a User Equipment, UE 105/106, apparatus according to the invention. The UE comprises a processor PCU_UE an interface IF_UE and a memory, MEM_UE, in which memory instructions are stored for carrying out the method steps explained above. The UE communicates via the interface IF_UE. The IF_UE comprises both an external interface, communicating with a transmitter and receiver, and internal interfaces (not shown).

There is also shown a Quality of Experience, QoE, entity 101 comprising a processor PCU_Q, an interface IF_Q; and a memory, MEM_Q. Instructions are stored in the memory for being performed by the processor such that the method steps explained above are carried out and signalling is communicated on the interface.

Further, an Operation and Maintenance, OaM, entity 102 is provided comprising a processor PCU_M, an interface IF_M; and a memory, MEM_M. Instructions are stored in the memory for being performed by the processor such that the method steps explained above are carried out and signalling is communicated on the interface.

Moreover, a source or a target eNodeB, S/T eNB 103/104 is provided comprising a processor PCU_S, an interface IF_S; and a memory, MEM_S. Instructions are stored in the memory for being performed by the processor such that the method steps explained above are carried out and signalling is communicated on interfaces.

The above apparatuses / entities are adapted to communicate over known external telecom interfaces or via application programming interfaces, API, as appropriate.

It is noted that the features of the methods described above, and in the following, may be implemented in software and carried out on a data processing device or other processing means caused by the execution of program code means such as computer-executable instructions. Here and in the following, the term processing means comprises any circuit and/or device suitably adapted to perform the above functions. In particular, the above term comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof. For example, the program code means may be loaded in a memory, such as a RAM (Random Access Memory), from a storage medium, such as a read-only memory (ROM) or other non-volatile memory, such as flash memory, or from another device via a suitable data interface, the described features may be implemented by hardwired circuitry instead of software or in combination with software.

A computer program or computer program product is provided carrying out the method steps defined above when run on a computer.

The methods discussed above may alternatively be implemented by means of a system based on network functions virtualization. In fig. 7, further embodiments of the invention are implemented by means of such a network function virtualization system, NFVS, formed on e.g. general-purpose servers, standard storage and switches. The NFVS may be arranged along the lines described in Fig. 4, ETSI GS NFV 002 V. 1.1.1 (2013-10) and comprises the following elements: A NFV management and orchestration system comprising an Orchestrator, ORCH, a VNF manager, VNF_MGR, and a virtualised Infrastructure manager, VIRT_INFRA_MGR. The NFVS moreover comprises an operational / business support system, OP/BUSS_SUPP_SYST; a number of virtual network function instances, VNF, by which the method steps explained above are instantiated; and a virtualised infrastructure, VIRT_INFRA. The VIRT_INFRA comprises a virtual computing, VIRT_COMP, virtual network; VIRT_NETW, and virtual memory, VIRT_MEM, a virtualisation layer, VIRT_LAYER, (e.g. hypervisor) and shared hardware resources, SHARED_HARDW_RES comprising computing devices, COMP, network devices, NETW, comprising e.g. standard switches and other network devices, and standard data storage devices, MEM.

According to non-claimed embodiments of the invention there is provided:
A method for a system comprising a Quality of Experience, QoE, entity 101; an Operation and Maintenance, OaM, entity 102; a source and a target Radio Access Node, S-RAN; T-RAN, eNodeB, S/T eNB 103/104 and a User Equipment, UE 105/106; the method comprising - using an area data structure (withinArea) indicating to an application whether the UE is ei-ther inside or outside a targeted area, TA, of the application level measurement reporting for the application indicated by an application measure service type information element (<app-meas_service_type>).

The method may pertain to the User Equipment, UE 105/106; being handed over 54, 55 from a source to a target eNodeB 103/104.
the S-RAN 103 may - convey 52 an area data structure to the UE, the T-RAN 104 may be
- issuing 55 an updated area data structure to the S-RAN, the S-RAN 103 then - transmitting 56 the updated area data structure to the UE.

The targeted Area is defined as at least one of a single cell or list of cells; a Tracking Area; a Public Land Mobile Network, PLMN.

Further, a method for a Radio Access Node, RAN S-eNB103 is provided, denoted source RAN, S-RAN, adapted for interacting with an Operations and Maintenance, OAM, entity, 102, another RAN, denoted target RAN 104, T-RAN, and a User Entity, UE comprising an UE Access Stratum 105 and a UE application level 106, comprising
- receiving 51 a QoE job request message from the OAM, comprising a targeted area, TA, and a Container element with a measurement configuration file,
- transmitting 52 a Radio Resource Control RRC message including SET-UP information and a QoE data structure to the UE access stratum 105, the OoE data structure compris-ing an Area data structure (withinArea) and a Container element, allowing the UE access stratum to forward the Area Data Structure and the container to the UE application level 106,
- taking part in a handover procedure and issuing 54 a Handover Request message com-prising the targeted Area to the target RAN T-eNB, 104,
- receiving a Handover Request Acknowledge message comprising an updated value of the area data structure from the target RAN,
- transmitting 56 a RRC_Connection_Reconfiguration_Request message with the updat-ed value of the area data structure to the UE access stratum 105,
- allowing the UE access stratum 105 to forward an AT command to the UE application level 57 to start a QoE measurement recording session as specified in the measurement configuration file if the UE is within the targeted Area, TA, and for preparing a QoE report.

There is further provided a method for a Radio Access Node, RAN T-eNB104, denoted target RAN, T-RAN, adapted for interacting with an QoE collection entity, 101, another RAN, denoted source RAN 103, and a User Entity, UE comprising an UE Access Stratum 105 and a UE application level 106, wherein
- upon receiving 56 from the UE Access Stratum a RRC_Connection_Reconfiguration_Complete message 58,
- upon receiving 63 a QoE report from the UE application level 106 via 62 the UE ac-cess stratum 105;
- forwarding 64 the QoE report to the QoE Collection, entity 101.

Moreover, a method User Entity, UE, is provided comprising a UE Access Stratum 105 and a UE application level 106, the UE being adapted for
- conveying a first AT command 53 comprising an area data structure (withinArea) indicat-ing to an application whether the UE is either inside or outside a targeted area, TA, of the application level measurement reporting for the application indicated by an application measure service type information element (<app-meas_service_type>) from the UE Access Stratum 105 to the UE application level 106.

The user entity according may further b adapted for communicating with a Radio Access Node 103, 104, RAN, and interacting with an QoE collection entity a QoE, the method further comprising the UE access stratum 105
- receiving 56 a RRC_Connection_Reconfiguration_Request message with an updated value of the area data structure (withinArea) from the Radio Access Node T-RAN, 104;
- transmitting an AT command to the UE application level 57 comprising the updated area data structure (withinArea);
the UE application level 106
- starting a QoE measurement recording session as specified in a measurement configura-tion file if the UE is within the targeted Area, TA, and preparing a QoE report;
- transmitting the QoE report to the UE access stratum 105;
the UE access stratum
- forwarding the QoE report to the RAN.

There is also provided a computer program or computer program product comprising instructions, when run on a computer, carrying out steps explained above.

A system is provided comprising a Quality of Experience, QoE, entity 101; an Operation and Maintenance, OaM, entity 102; a source and a target Radio Access Node, S-RAN; T-RAN, eNodeB, S/T eNB 103/104 and a User Equipment, UE 105/106; the system being adapted for
- using an area data structure (withinArea) indicating to an application whether the UE is ei-ther inside or outside a targeted area, TA, of the application level measurement reporting for the application indicated by an application measure service type information element (<app-meas_service_type>.

A Radio Access Node, RAN S-eNB103 is described, denoted source RAN, S-RAN, adapted for interact-ing with an Operations and Maintenance, OAM, entity, 102, another RAN, denoted target RAN 104, T-RAN, and a User Entity, UE comprising an UE Access Stratum 105 and a UE application level 106, the RAN being adapted for
- receiving 51 a QoE job request message from the OAM, comprising a targeted area, TA, and a Container element with a measurement configuration file,
- transmitting 52 a Radio Resource Control RRC message including SET-UP information and a QoE data structure to the UE access stratum 105, the OoE data structure compris-ing an Area data structure (withinArea) and a Container element, allowing the UE access stratum to forward the Area Data Structure and the container to the UE application level 106,
- taking part in a handover procedure and issuing 54 a Handover Request message com-prising the targeted Area to the target RAN T-eNB, 104,
- receiving a Handover Request Acknowledge message comprising an updated value of the area data structure from the target RAN,
- transmitting 56 a RRC_Connection_Reconfiguration_Request message with the updat-ed value of the area data structure to the UE access stratum 105,
- allowing the UE access stratum 105 to forward an AT command to the UE application level 57 to start a QoE measurement recording session as specified in the measurement configuration file if the UE is within the targeted Area, TA, and for preparing a QoE report.

Further a Radio Access Node, RAN T-eNB104 si described, denoted target RAN, T-RAN, adapted for interact-ing with an QoE collection entity, 101, another RAN, denoted source RAN 103, and a User Entity, UE comprising an UE Access Stratum 105 and a UE application level 106, wherein the RAN being adapted for
- upon receiving 56 from the UE Access Stratum a RRC_Connection_Reconfiguration_Complete message 58,
- upon receiving 63 a QoE report from the UE application level 106 via 62 the UE ac-cess stratum 105;
- forwarding 64 the QoE report to the QoE Collection, entity, 101.

Moreover a User Entity, UE, is set fort comprising a UE Access Stratum 105 and a UE application level 106, the UE being adapted for
- conveying a first AT command 53 comprising an area data structure (withinArea) indicat-ing to an application whether the UE is either inside or outside a targeted area, TA, of the application level measurement reporting for the application indicated by an application measure service type information element (<app-meas_service_type>) from the UE Access Stratum 105 to the UE application level 106.

Some of the embodiments contemplated herein will now be described more fully with reference to the accompanying drawing QQ1. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Although the subject matter described herein may be implemented in any appropriate type of system using any suitable components, the embodiments disclosed herein are described in relation to a wireless network, such as the example wireless network illustrated in Figs 8 and 9. For simplicity, the wireless network of Figs 8 and 9 only depicts network QQ106, network nodes QQ160 and QQ160b, and WDs QQ110, QQ110b, and QQ110c. In practice, a wireless network may further include any additional elements suitable to sup-port communication between wireless devices or between a wireless device and another communication device, such as a landline telephone, a service provider, or any other net-work node or end device. Of the illustrated components, network node QQ160 and wire-less device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP net-works, public switched telephone networks (PSTNs), packet data networks, optical net-works, widearea networks (WANs), local area networks (LANs), wireless local area net-works (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless ac-cess to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs).

Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), OAM (O&M) nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figs. 8 + 9, network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of Figs. 8 + 9 may represent a device that includes the illustrated combination of hardware components, other embodiments may comprise net-work nodes with different combinations of components. It is to be understood that a net-work node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a micro-processor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed here-in. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband pro-cessing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), re-movable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, inter-face QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and pro-cessing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, inter-face QQ190 may include one or more ports or terminals QQ194, radio front end circuitry QQ192, and RF transceiver circuitry QQ172, as part of a radio unit (not shown), and inter-face QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ190 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless de-vice, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components be-yond those shown in Figs. 8 + 9 that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160. As used herein, wireless device (WD) refers to a device capable, configured, arranged and/or operable to communicate wirelessly with network nodes and/or other wireless de-vices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human inter-action. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, pro-cessing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110. Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ114 is connected to antenna QQ111 and pro-cessing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to pro-cessing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For ex-ample, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being per-formed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD.

These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated.

User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, de-vices and circuits, and output interfaces, devices and circuits. User interface equipment QQ132 is configured to allow input of information into WD QQ110 and is connected to processing circuitry QQ120 to allow processing circuitry QQ120 to process the input in-formation. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, con-verting, or other modification to the power from power source QQ136 to make the power suitable for the respective components of WD QQ110 to which power is supplied.

### Abbreviations

- 3GPP: Third Generation Partnership Project
- CN: Core Network
- eNB: E-UTRAN Node B
- E-UTRAN: Evolved Universal Terrestrial Radio Access Network
- gNB: gNode B (a Node B supporting NR and connectivity to NGC)
- HSPA: High-Speed Packet Access
- LTE: Long Term Evolution
- MDT: Minimization of Drive Tests
- NGC: Next Generation Core
- NR: New Radio
- QoE: Quality of Experience
- RAN: Radio Access Network
- RANAP: Radio Access Network Application Part
- RNC: Radio Network Controller
- RRC: Radio Resource Control
- UE: User Equipment
- UMTS: Universal Mobile Telecommunications System
- UTRAN: Universal Terrestrial Radio Access Network

## Claims

1. Method for a Radio Access Node, RAN (103), denoted source RAN, S-RAN, adapted for interacting with an Operations and Maintenance, OAM, entity, (102), and with another RAN, denoted target RAN (104), T-RAN, and adapted for interacting with a User Entity, UE comprising an UE Access Stratum (105) and a UE application level (106),
the source RAN
- using an Area data structure (withinArea) enabling the UE to resolve whether it is either inside or outside a targeted area, TA, of an application level measurement reporting, allowing the UE application level (57) to start a QoE measurement recording session as specified in the measurement configuration file if the UE is within the targeted Area, TA, and for preparing a QoE report,
- receiving (51) a QoE job request message from the OAM, comprising a targeted area, TA, and a Container element with a measurement configuration file,
- transmitting (52) a Radio Resource Control RRC message including SET-UP information and a QoE data structure, the QoE data structure comprising the Area data structure, (withinArea),
- taking part in a handover procedure and issuing (54) a Handover Request message comprising the targeted Area to the target RAN (104),
- receiving a Handover Request Acknowledge message (55) from the target RAN,
- transmitting (56) a RRC_Connection_Reconfiguration_Request message,
- allowing a transmission of a command to the UE application level (57) to start a QoE measurement recording session as specified in the measurement configuration file if the UE is within the targeted Area, TA, and for preparing a QoE report,
**characterized in that**
the QoE data structure comprising the area data structure (withinArea) and moreover a Container, allowing the UE access stratum to forward (53) the area data structure and the container to the UE application level (106),
the Handover Request Acknowledge message (55) comprises an updated value of the area data structure from the target RAN,
the source RAN
- transmitting (56) the RRC_Connection_Reconfiguration_Request message with the updated value of the area data structure to the UE access stratum (105), allowing the updated value of the area data structure to be transmitted in an AT command (57) to the UE application level.

2. Method for a system comprising a Radio Access Node, RAN (103), denoted source RAN, S-RAN, adapted for interacting with an Operations and Maintenance, OAM, entity, (102), and another RAN, denoted target RAN (104), T-RAN, and a user entity, UE,
the source RAN and target RAN being adapted for interacting with the User Entity, UE comprising an UE Access Stratum (105) and a UE application level (106),
the source RAN
- using an Area data structure (withinArea) enabling the UE to resolve whether it is either inside or outside a targeted area, TA, of an application level measurement reporting, allowing the UE application level (57) to start a QoE measurement recording session as specified in the measurement configuration file if the UE is within the targeted Area, TA, and for preparing a QoE report,
- receiving (51) a QoE job request message from the OAM, comprising a targeted area, TA, and a Container element with a measurement configuration file,
- transmitting (52) a Radio Resource Control RRC message including SET-UP information and a QoE data structure, the QoE data structure comprising the Area data structure, (withinArea),
- taking part in a handover procedure and issuing (54) a Handover Request message comprising the targeted Area to the target RAN (104),
- receiving a Handover Request Acknowledge message (55) from the target RAN,
- transmitting (56) a RRC_Connection_Reconfiguration_Request message,
- allowing a transmission of a command to the UE application level (57) to start a QoE measurement recording session as specified in the measurement configuration file if the UE is within the targeted Area, TA, and for preparing a QoE report,
**characterized in that**
the QoE data structure comprising the area data structure (withinArea) and moreover a Container, allowing the UE access stratum to forward (53) the area data structure and the container to the UE application level (106),
the Handover Request Acknowledge message (55) comprises an updated value of the area data structure from the target RAN,
the source RAN
- transmitting (56) the RRC_Connection_Reconfiguration_Request message with the updated value of the area data structure to the UE access stratum (105), allowing the updated value of the area data structure to be transmitted in an AT command (57) to the UE application level.
the method further comprises the target RAN
- transmitting the Handover Request Acknowledge message (55).

3. Method for a system according to claim 2, wherein the UE being adapted for
- conveying a first AT command (53) comprising an area data structure (withinArea) indicating to an application whether the UE is either inside or outside a targeted area, TA, of the application level measurement reporting for the application indicated by an application measure service type information element (<app-meas_service_type>) from the UE Access Stratum (105) to the UE application level (106).

4. Method for a system according to claim 3 further comprising the UE access stratum (105)
- receiving (56) a RRC_Connection_Reconfiguration_Request message with an updated value of the area data structure (withinArea) from the Radio Access Node (T-RAN, 104);
- transmitting an AT command to the UE application level (57) comprising the updated area data structure (withinArea);
the UE application level (106)
- starting a QoE measurement recording session as specified in a measurement configuration file if the UE is within the targeted Area, TA, and preparing a QoE report;
- transmitting the QoE report to the UE access stratum (105);
the UE access stratum
- forwarding the QoE report to the RAN.

5. Computer program or computer program product comprising instructions, when run on a computer of a Radio Access Node, RAN, denoted source RAN, S-RAN, carrying out steps according to any of claims 1 - 4.

6. Radio Access Node, RAN (103), denoted source RAN, S-RAN, adapted for interacting with an Operations and Maintenance, OAM, entity, (102), and with another RAN, de-noted target RAN (104), T-RAN, and adapted for interacting with a User Entity, UE comprising an UE Access Stratum (105) and a UE application level (106),
the source RAN being adapted for
- using an Area data structure (withinArea) enabling the UE to resolve whether it is either inside or outside a targeted area, TA, of an application level measurement reporting, allowing the UE application level (57) to start a QoE measurement recording session as specified in the measurement configuration file if the UE is within the targeted Area, TA, and for preparing a QoE report,
- receiving (51) a QoE job request message from the OAM, comprising a targeted area, TA, and a Container element with a measurement configuration file,
- transmitting (52) a Radio Resource Control RRC message including SET-UP information and a QoE data structure, the QoE data structure comprising the Area data structure, (withinArea),
- taking part in a handover procedure and issuing (54) a Handover Request message comprising the targeted Area to the target RAN (104),
- receiving a Handover Request Acknowledge message (55) from the target RAN,
- transmitting (56) a RRC_Connection_Reconfiguration_Request message,
- allowing a transmission of a command to the UE application level (57) to start a QoE measurement recording session as specified in the measurement configuration file if the UE is within the targeted Area, TA, and for preparing a QoE report,
**characterized in that**
the QoE data structure comprising the area data structure (withinArea) and moreover a Container, allowing the UE access stratum to forward (53) the area data structure and the container to the UE application level (106),
the Handover Request Acknowledge message (55) comprises an updated value of the area data structure from the target RAN,
the source RAN being further adapted for
- transmitting (56) the RRC_Connection_Reconfiguration_Request message with the updated value of the area data structure to the UE access stratum (105), allowing the updated value of the area data structure to be transmitted in an AT command (57) to the UE application level.

7. System comprising a Radio Access Node, RAN (103), denoted source RAN, S-RAN, adapted for interacting with an Operations and Maintenance, OAM, entity, (102), and another RAN, denoted target RAN (104), T-RAN, and a user entity, UE,
the source RAN and target RAN being adapted for interacting with the User Entity, UE comprising an UE Access Stratum (105) and a UE application level (106),
the source RAN being further adapted for
- using an Area data structure (withinArea) enabling the UE to resolve whether it is either inside or outside a targeted area, TA, of an application level measurement reporting, allowing the UE application level (57) to start a QoE measurement recording session as specified in the measurement configuration file if the UE is within the targeted Area, TA, and for preparing a QoE report,
- receiving (51) a QoE job request message from the OAM, comprising a targeted area, TA, and a Container element with a measurement configuration file,
- transmitting (52) a Radio Resource Control RRC message including SET-UP information and a QoE data structure, the QoE data structure comprising the Area data structure, (withinArea),
- taking part in a handover procedure and issuing (54) a Handover Request message comprising the targeted Area to the target RAN (104),
- receiving a Handover Request Acknowledge message (55) from the target RAN,
- transmitting (56) a RRC_Connection_Reconfiguration_Request message,
- allowing a transmission of a command to the UE application level (57) to start a QoE measurement recording session as specified in the measurement configuration file if the UE is within the targeted Area, TA, and for preparing a QoE report,
**characterized in that**
the QoE data structure comprising the area data structure (withinArea) and moreover a Container, allowing the UE access stratum to forward (53) the area data structure and the container to the UE application level (106),
the Handover Request Acknowledge message (55) comprises an updated value of the area data structure from the target RAN,
the source RAN
- transmitting (56) the RRC_Connection_Reconfiguration_Request message with the updated value of the area data structure to the UE access stratum (105), allowing the updated value of the area data structure to be transmitted in an AT command (57) to the UE application level,
the method further comprises the target RAN,
- transmitting the Handover Request Acknowledge message (55).

8. System according to claim 7, wherein the UE being adapted for
- conveying a first AT command (53) comprising an area data structure (withinArea) indicating to an application whether the UE is either inside or outside a targeted area, TA, of the application level measurement reporting for the application indicated by an application measure service type information element (<app-meas_service_type>) from the UE Access Stratum (105) to the UE application level (106).

9. System according to claim 8 further comprising the UE access stratum (105) being adapted for
- receiving (56) a RRC_Connection_Reconfiguration_Request message with an updated value of the area data structure (withinArea) from the Radio Access Node (T-RAN, 104);
- transmitting an AT command to the UE application level (57) comprising the updated area data structure (withinArea);
the UE application level (106) being adapted for
- starting a QoE measurement recording session as specified in a measurement configuration file if the UE is within the targeted Area, TA, and preparing a QoE report;
- transmitting the QoE report to the UE access stratum (105);
the UE access stratum
- forwarding the QoE report to the RAN.

## Patentansprüche

1. Verfahren für einen Funkzugangsknoten, RAN (103), der als Quell-RAN, S-RAN, bezeichnet wird und zum Interagieren mit einer Betriebs- und Wartungs-, OAM-, Einheit (102) und mit einem weiteren RAN, der als Ziel-RAN (104), T-RAN, bezeichnet wird, angepasst ist, und zum Interagieren mit einer Benutzereinheit, UE, angepasst ist, die eine UE-Zugangsschicht (105) und eine UE-Anwendungsebene (106) umfasst, wobei der Quell-RAN
- eine Bereichsdatenstruktur (withinArea) verwendet, die es der UE ermöglicht, zu klären, ob sie sich innerhalb oder außerhalb eines anvisierten Bereichs, TA, eines Anwendungsebenenmessberichts befindet, was es der UE-Anwendungsebene (57) ermöglicht, eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
- eine QoE-Auftragsanforderungsnachricht von der OAM empfängt (51), die einen anvisierten Bereich, TA, und ein Containerelement mit einer Messkonfigurationsdatei umfasst,
- eine Radio-Resource-Control-, RRC-, Nachricht, die SET-UP-Informationen und eine QoE-Datenstruktur einschließt, überträgt (52), wobei die QoE-Datenstruktur die Bereichsdatenstruktur (withinArea) umfasst,
- an einem Handover-Vorgang teilnimmt und eine Handover-Anforderungsnachricht, die den anvisierten Bereich umfasst, an den Ziel-RAN (104) ausgibt (54),
- eine Handover-Anforderungsbestätigungsnachricht (55) von dem Ziel-RAN empfängt,
- eine RRC_Connection_Reconfiguration_Request-Nachricht überträgt (56),
- eine Übertragung eines Befehls an die UE-Anwendungsebene (57) ermöglicht, um eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
**dadurch gekennzeichnet, dass**
die QoE-Datenstruktur die Bereichsdatenstruktur (withinArea) und darüber hinaus einen Container umfasst, was es der UE-Zugangsschicht ermöglicht, die Bereichsdatenstruktur und den Container an die UE-Anwendungsebene (106) weiterzuleiten (53),
die Handover-Anforderungsbestätigungsnachricht (55) einen aktualisierten Wert der Bereichsdatenstruktur von dem Ziel-RAN umfasst,
wobei der Quell-RAN
- Übertragen (56) der RRC_Connection_Reconfiguration_Request-Nachricht mit dem aktualisierten Wert der Bereichsdatenstruktur an die UE-Zugangsschicht (105), was ermöglicht, dass der aktualisierte Wert der Bereichsdatenstruktur in einem AT-Befehl (57) an die UE-Anwendungsebene übertragen wird.

2. Verfahren für ein System, das einen Funkzugangsknoten, RAN (103), der als Quell-RAN, S-RAN, bezeichnet wird und zum Interagieren mit einer Betriebs- und Wartungs-, OAM-, Einheit (102) und mit einem weiteren RAN, der als Ziel-RAN (104), T-RAN, bezeichnet wird, angepasst ist, und eine Benutzereinheit, UE, umfasst, wobei der Quell-RAN und der Ziel-RAN dazu angepasst sind, mit der Benutzereinheit, UE, zu interagieren, die eine UE-Zugangsschicht (105) und eine UE-Anwendungsebene (106) umfasst, wobei der Quell-RAN
- eine Bereichsdatenstruktur (withinArea) verwendet, die es der UE ermöglicht, zu klären, ob sie sich innerhalb oder außerhalb eines anvisierten Bereichs, TA, eines Anwendungsebenenmessberichts befindet, was es der UE-Anwendungsebene (57) ermöglicht, eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
- eine QoE-Auftragsanforderungsnachricht von der OAM empfängt (51), die einen anvisierten Bereich, TA, und ein Containerelement mit einer Messkonfigurationsdatei umfasst,
- eine Radio-Resource-Control-, RRC-, Nachricht, die SET-UP-Informationen und eine QoE-Datenstruktur einschließt, überträgt (52), wobei die QoE-Datenstruktur die Bereichsdatenstruktur (withinArea) umfasst,
- an einem Handover-Vorgang teilnimmt und eine Handover-Anforderungsnachricht, die den anvisierten Bereich umfasst, an den Ziel-RAN (104) ausgibt (54),
- eine Handover-Anforderungsbestätigungsnachricht (55) von dem Ziel-RAN empfängt,
- eine RRC_Connection_Reconfiguration_Request-Nachricht überträgt (56),
- eine Übertragung eines Befehls an die UE-Anwendungsebene (57) ermöglicht, um eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
**dadurch gekennzeichnet, dass**
die QoE-Datenstruktur die Bereichsdatenstruktur (withinArea) und darüber hinaus einen Container umfasst, was es der UE-Zugangsschicht ermöglicht, die Bereichsdatenstruktur und den Container an die UE-Anwendungsebene (106) weiterzuleiten (53),
die Handover-Anforderungsbestätigungsnachricht (55) einen aktualisierten Wert der Bereichsdatenstruktur von dem Ziel-RAN umfasst,
wobei der Quell-RAN
- Übertragen (56) der RRC_Connection_Reconfiguration_Request-Nachricht mit dem aktualisierten Wert der Bereichsdatenstruktur an die UE-Zugangsschicht (105), was ermöglicht, dass der aktualisierte Wert der Bereichsdatenstruktur in einem AT-Befehl (57) an die UE-Anwendungsebene übertragen wird.
das Verfahren weiter umfasst, dass der Ziel-RAN
- die Handover-Anforderungsbestätigungsnachricht (55) überträgt.

3. Verfahren für ein System nach Anspruch 2, wobei die UE angepasst ist zum
- Übermitteln eines ersten AT-Befehls (53), der eine Bereichsdatenstruktur (withinArea) umfasst, die einer Anwendung anzeigt, ob sich die UE entweder innerhalb oder außerhalb eines anvisierten Bereichs, TA, des Anwendungsebenenmessberichts für die Anwendung befindet, die durch ein Informationselement des Anwendungsmessdiensttyps (<app-meas_service_type>) von der UE-Zugangsschicht (105) zu der UE-Anwendungsebene (106) angezeigt wird.

4. Verfahren für ein System nach Anspruch 3, das weiter umfasst, dass die UE-Zugangsschicht (105)
- eine RRC_Connection_Reconfiguration_Request-Nachricht mit einem aktualisierten Wert der Bereichsdatenstruktur (withinArea) von dem Funkzugangsknoten (T-RAN, 104) empfängt (56);
- Übertragen eines AT-Befehls, der die aktualisierte Bereichsdatenstruktur (withinArea) enthält, an die UE-Anwendungsebene (57);
wobei die UE-Anwendungsebene (106)
- Starten einer Aufzeichnungssitzung zur QoE-Messung gemäß den Angaben in einer Messkonfigurationsdatei, wenn sich die UE innerhalb des anvisierten Bereichs, TA, befindet, und Erstellen eines QoE-Berichts;
- Übertragen des QoE-Berichts an die UE-Zugangsschicht (105);
wobei die UE-Zugangsschicht
- den QoE-Bericht an den RAN weiterleitet.

5. Computerprogramm oder Computerprogrammprodukt, das Anweisungen enthält, die, wenn sie auf einem Computer eines Funkzugangsknotens, RAN, der als Quell-RAN, S-RAN, bezeichnet wird, ausgeführt werden, Schritte nach einem der Ansprüche 1 bis 4 ausführen.

6. Funkzugangsknoten, RAN (103), der als Quell-RAN, S-RAN, bezeichnet wird und zum Interagieren mit einer Betriebs- und Wartungs-, OAM-, Einheit (102) und mit einem weiteren RAN, der als Ziel-RAN (104), T-RAN, bezeichnet wird, angepasst ist, und zum Interagieren mit einer Benutzereinheit, UE, angepasst ist, die eine UE-Zugangsschicht (105) und eine UE-Anwendungsebene (106) umfasst, wobei der Quell-RAN angepasst ist zum
- eine Bereichsdatenstruktur (withinArea) verwendet, die es der UE ermöglicht, zu klären, ob sie sich innerhalb oder außerhalb eines anvisierten Bereichs, TA, eines Anwendungsebenenmessberichts befindet, was es der UE-Anwendungsebene (57) ermöglicht, eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
- eine QoE-Auftragsanforderungsnachricht von der OAM empfängt (51), die einen anvisierten Bereich, TA, und ein Containerelement mit einer Messkonfigurationsdatei umfasst,
- eine Radio-Resource-Control-, RRC-, Nachricht, die SET-UP-Informationen und eine QoE-Datenstruktur einschließt, überträgt (52), wobei die QoE-Datenstruktur die Bereichsdatenstruktur (withinArea) umfasst,
- an einem Handover-Vorgang teilnimmt und eine Handover-Anforderungsnachricht, die den anvisierten Bereich umfasst, an den Ziel-RAN (104) ausgibt (54),
- eine Handover-Anforderungsbestätigungsnachricht (55) von dem Ziel-RAN empfängt,
- eine RRC_Connection_Reconfiguration_Request-Nachricht überträgt (56),
- eine Übertragung eines Befehls an die UE-Anwendungsebene (57) ermöglicht, um eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
**dadurch gekennzeichnet, dass**
die QoE-Datenstruktur die Bereichsdatenstruktur (withinArea) und darüber hinaus einen Container umfasst, was es der UE-Zugangsschicht ermöglicht, die Bereichsdatenstruktur und den Container an die UE-Anwendungsebene (106) weiterzuleiten (53),
die Handover-Anforderungsbestätigungsnachricht (55) einen aktualisierten Wert der Bereichsdatenstruktur von dem Ziel-RAN umfasst,
wobei der Quell-RAN weiter angepasst ist zum
- Übertragen (56) der RRC_Connection_Reconfiguration_Request-Nachricht mit dem aktualisierten Wert der Bereichsdatenstruktur an die UE-Zugangsschicht (105), was ermöglicht, dass der aktualisierte Wert der Bereichsdatenstruktur in einem AT-Befehl (57) an die UE-Anwendungsebene übertragen wird.

7. System, das einen Funkzugangsknoten, RAN (103), der als Quell-RAN, S-RAN, bezeichnet wird und zum Interagieren mit einer Betriebs- und Wartungs-, OAM-, Einheit (102) und mit einem weiteren RAN, der als Ziel-RAN (104), T-RAN, bezeichnet wird, angepasst ist, und eine Benutzereinheit, UE, umfasst, wobei der Quell-RAN und der Ziel-RAN dazu angepasst sind, mit der Benutzereinheit, UE, zu interagieren, die eine UE-Zugangsschicht (105) und eine UE-Anwendungsebene (106) umfasst, wobei der Quell-RAN weiter angepasst ist zum
- eine Bereichsdatenstruktur (withinArea) verwendet, die es der UE ermöglicht, zu klären, ob sie sich innerhalb oder außerhalb eines anvisierten Bereichs, TA, eines Anwendungsebenenmessberichts befindet, was es der UE-Anwendungsebene (57) ermöglicht, eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
- Empfangen (51) einer QoE-Auftragsanforderungsnachricht von der OAM, die einen anvisierten Bereich, TA, und ein Containerelement mit einer Messkonfigurationsdatei umfasst,
- eine Radio-Resource-Control-, RRC-, Nachricht, die SET-UP-Informationen und eine QoE-Datenstruktur einschließt, überträgt (52), wobei die QoE-Datenstruktur die Bereichsdatenstruktur (withinArea) umfasst,
- Teilnehmen an einem Handover-Vorgang und Ausgeben (54) einer Handover-Anforderungsnachricht, die den anvisierten Bereich umfasst, an den Ziel-RAN (104),
- eine Handover-Anforderungsbestätigungsnachricht (55) von dem Ziel-RAN empfängt,
- eine RRC_Connection_Reconfiguration_Request-Nachricht überträgt (56),
- eine Übertragung eines Befehls an die UE-Anwendungsebene (57) ermöglicht, um eine Aufzeichnungssitzung zur QoE-Messung gemäß den Angaben in der Messkonfigurationsdatei zu starten, wenn sich die UE innerhalb des anvisierten Bereichs, TA, befindet, und um einen QoE-Bericht zu erstellen,
**dadurch gekennzeichnet, dass**
die QoE-Datenstruktur die Bereichsdatenstruktur (withinArea) und darüber hinaus einen Container umfasst, was es der UE-Zugangsschicht ermöglicht, die Bereichsdatenstruktur und den Container an die UE-Anwendungsebene (106) weiterzuleiten (53),
die Handover-Anforderungsbestätigungsnachricht (55) einen aktualisierten Wert der Bereichsdatenstruktur von dem Ziel-RAN umfasst,
wobei der Quell-RAN
- die RRC_Connection_Reconfiguration_Request-Nachricht mit dem aktualisierten Wert der Bereichsdatenstruktur an die UE-Zugangsschicht (105) überträgt (56), was ermöglicht, dass der aktualisierte Wert der Bereichsdatenstruktur in einem AT-Befehl (57) an die UE-Anwendungsebene übertragen wird,
das Verfahren weiter umfasst, dass das Ziel-RAN,
- die Handover-Anforderungsbestätigungsnachricht (55) überträgt.

8. System nach Anspruch 7, wobei die UE angepasst ist zum
- Übermitteln eines ersten AT-Befehls (53), der eine Bereichsdatenstruktur (withinArea) umfasst, die einer Anwendung anzeigt, ob sich die UE entweder innerhalb oder außerhalb eines anvisierten Bereichs, TA, des Anwendungsebenenmessberichts für die Anwendung befindet, die durch ein Informationselement des Anwendungsmessdiensttyps (<app-meas_service_type>) von der UE-Zugangsschicht (105) zu der UE-Anwendungsebene (106) angezeigt wird.

9. System nach Anspruch 8, das weiter umfasst, dass die UE-Zugangsschicht (105) angepasst ist zum
- eine RRC_Connection_Reconfiguration_Request-Nachricht mit einem aktualisierten Wert der Bereichsdatenstruktur (withinArea) von dem Funkzugangsknoten (T-RAN, 104) empfängt (56);
- Übertragen eines AT-Befehls, der die aktualisierte Bereichsdatenstruktur (withinArea) enthält, an die UE-Anwendungsebene (57);
wobei die UE-Anwendungsebene (106) angepasst ist zum
- Starten einer Aufzeichnungssitzung zur QoE-Messung gemäß den Angaben in einer Messkonfigurationsdatei, wenn sich die UE innerhalb des anvisierten Bereichs, TA, befindet, und Erstellen eines QoE-Berichts;
- Übertragen des QoE-Berichts an die UE-Zugangsschicht (105);
wobei die UE-Zugangsschicht
- den QoE-Bericht an den RAN weiterleitet.

## Revendications

1. Procédé pour un nœud d'accès radio, RAN (103), appelé RAN source, S-RAN, adapté pour interagir avec une entité d'opérations et de maintenance, OAM (102), et avec un autre RAN, appelé RAN cible (104), T-RAN, et adapté pour interagir avec une entité d'utilisateur, UE, comprenant une strate d'accès UE (105) et un niveau d'application UE (106), le RAN source
- utilisant une Structure de données de zone (withinArea) permettant à l'UE de résoudre s'il est à l'intérieur ou à l'extérieur d'une zone ciblée, TA, d'un rapport de mesure de niveau d'application, permettant au niveau d'application UE (57) de démarrer une session d'enregistrement de mesure de QoE telle que spécifiée dans le fichier de configuration de mesure si l'UE est à l'intérieur de la Zone ciblée, TA, et pour préparer un rapport QoE,
- recevant (51) un message de requête de tâche QoE à partir de l'OAM, comprenant une zone ciblée, TA, et un Élément de conteneur avec un fichier de configuration de mesure,
- transmettant (52) un message de Contrôle de ressource radio RRC incluant des informations de PARAMÉTRAGE et une structure de données QoE, la structure de données QoE comprenant la Structure de données de zone, (withinArea),
- prenant part à une procédure de transfert et émettant (54) un message de Requête de transfert comprenant la Zone ciblée au RAN cible (104),
- recevant un message d'Accusé de réception de requête de transfert (55) à partir du RAN cible,
- transmettant (56) un message de Requête_Reconfiguration_Connexion_RRC,
- permettant une transmission d'une commande au niveau d'application UE (57) pour démarrer une session d'enregistrement de mesure de QoE telle que spécifiée dans le fichier de configuration de mesure si l'UE est à l'intérieur de la Zone ciblée, TA, pour préparer un rapport QoE,
**caractérisé en ce que**
la structure de données QoE comprenant la structure de données de zone (withinArea) et en outre un Conteneur, permettant à la strate d'accès UE de réacheminer (53) la structure de données de zone et le conteneur vers le niveau d'application UE (106),
le message d'Accusé de réception de requête de transfert (55) comprend une valeur mise à jour de la structure de données de zone à partir du RAN cible,
le RAN source
- transmettant (56) le message de Requête_Reconfiguration_Connexion_RRC avec la valeur mise à jour de la structure de données de zone à la strate d'accès UE (105), permettant à la valeur mise à jour de la structure de données de zone d'être transmise dans une commande AT (57) au niveau d'application UE.

2. Procédé pour un système comprenant un Nœud d'accès radio, RAN (103), appelé RAN source, S-RAN, adapté pour interagir avec une entité d'opérations et de maintenance, OAM (102), et un autre RAN, appelé RAN cible (104), T-RAN, et une entité d'utilisateur, UE, le RAN source et le RAN cible étant adaptés pour interagir avec l'Entité d'utilisateur, UE, comprenant une Strate d'accès UE (105) et un niveau d'application UE (106), le RAN source
- utilisant une Structure de données de zone (withinArea) permettant à l'UE de résoudre s'il est à l'intérieur ou à l'extérieur d'une zone ciblée, TA, d'un rapport de mesure de niveau d'application, permettant au niveau d'application UE (57) de démarrer une session d'enregistrement de mesure de QoE telle que spécifiée dans le fichier de configuration de mesure si l'UE est à l'intérieur de la Zone ciblée, TA, et pour préparer un rapport QoE,
- recevant (51) un message de requête de tâche QoE à partir de l'OAM, comprenant une zone ciblée, TA, et un Élément de conteneur avec un fichier de configuration de mesure,
- transmettant (52) un message de Contrôle de ressource radio RRC incluant des informations de PARAMÉTRAGE et une structure de données QoE, la structure de données QoE comprenant la Structure de données de zone, (withinArea),
- prenant part à une procédure de transfert et émettant (54) un message de Requête de transfert comprenant la Zone ciblée au RAN cible (104),
- recevant un message d'Accusé de réception de requête de transfert (55) à partir du RAN cible,
- transmettant (56) un message de Requête_Reconfiguration_Connexion_RRC,
- permettant une transmission d'une commande au niveau d'application UE (57) pour démarrer une session d'enregistrement de mesure de QoE telle que spécifiée dans le fichier de configuration de mesure si l'UE est à l'intérieur de la Zone ciblée, TA, pour préparer un rapport QoE,
**caractérisé en ce que**
la structure de données QoE comprenant la structure de données de zone (withinArea) et en outre un Conteneur, permettant à la strate d'accès UE de réacheminer (53) la structure de données de zone et le conteneur vers le niveau d'application UE (106),
le message d'Accusé de réception de requête de transfert (55) comprend une valeur mise à jour de la structure de données de zone à partir du RAN cible,
le RAN source
- transmettant (56) le message de Requête_Reconfiguration_Connexion_RRC avec la valeur mise à jour de la structure de données de zone à la strate d'accès UE (105), permettant à la valeur mise à jour de la structure de données de zone d'être transmise dans une commande AT (57) au niveau d'application UE.
le procédé comprenant en outre le RAN cible
- transmettant le message d'Accusé de réception de requête de transfert (55).

3. Procédé pour un système selon la revendication 2, dans lequel l'UE étant adapté pour
- véhiculer une première commande AT (53) comprenant une structure de données de zone (withinArea) indiquant à une application si l'UE est à l'intérieur ou à l'extérieur d'une zone ciblée, TA, du rapport de mesure de niveau d'application pour l'application indiquée par un élément d'information de type de service de mesure d'application (<app-meas_service_type>) de la Strate d'accès UE (105) vers le niveau d'application UE (106).

4. Procédé pour un système selon la revendication 3 comprenant en outre la strate d'accès UE (105)
- recevant (56) un message de Requête_Reconfiguration_Connexion_RRC avec une valeur mise à jour de la structure de données de zone (withinArea) à partir du Nœud d'accès radio (T-RAN, 104) ;
- transmettant une commande AT au niveau d'application UE (57) comprenant la structure de données de zone (withinArea) mise à jour ;
le niveau d'application UE (106)
- démarrant une session d'enregistrement de mesure de QoE telle que spécifiée dans un fichier de configuration de mesure si l'UE est à l'intérieur de la Zone ciblée, TA, et préparant un rapport QoE ;
- transmettant le rapport QoE à la strate d'accès UE (105) ;
la strate d'accès UE
- transférant le rapport QoE au RAN.

5. Programme informatique ou produit de programme informatique comprenant des instructions, lorsqu'il est exécuté sur un ordinateur d'un Nœud d'accès radio, RAN, appelé RAN source, S-RAN, réalisant des étapes selon l'une quelconque des revendications 1-4.

6. Nœud d'accès radio, RAN (103), appelé RAN source, S-RAN, adapté pour interagir avec une entité d'opérations et de maintenance, OAM (102), et avec un autre RAN, appelé RAN cible (104), T-RAN, et adapté pour interagir avec une entité d'utilisateur, UE, comprenant une Strate d'accès UE (105) et un niveau d'application UE (106), le RAN source étant adapté pour
- utiliser une Structure de données de zone (withinArea) permettant à l'UE de résoudre s'il est à l'intérieur ou à l'extérieur d'une zone ciblée, TA, d'un rapport de mesure de niveau d'application, permettant au niveau d'application UE (57) de démarrer une session d'enregistrement de mesure de QoE telle que spécifiée dans le fichier de configuration de mesure si l'UE est à l'intérieur de la Zone ciblée, TA, pour préparer un rapport QoE,
- recevoir (51) un message de requête de tâche QoE à partir de l'OAM, comprenant une zone ciblée, TA, et un Élément de conteneur avec un fichier de configuration de mesure,
- transmettre (52) un message de Contrôle de ressource radio RRC incluant des informations de PARAMÉTRAGE et une structure de données QoE, la structure de données QoE comprenant la Structure de données de zone, (withinArea),
- prendre part à une procédure de transfert et émettre (54) un message de Requête de transfert comprenant la Zone ciblée au RAN cible (104),
- recevoir un message d'Accusé de réception de requête de transfert (55) à partir du RAN cible,
- transmettre (56) un message de Requête_Reconfiguration_Connexion_RRC,
- permettre une transmission d'une commande au niveau d'application UE (57) pour démarrer une session d'enregistrement de mesure de QoE telle que spécifiée dans le fichier de configuration de mesure si l'UE est à l'intérieur de la Zone ciblée, TA, et pour préparer un rapport QoE,
**caractérisé en ce que**
la structure de données QoE comprenant la structure de données de zone (withinArea) et en outre un Conteneur, permettant à la strate d'accès UE de réacheminer (53) la structure de données de zone et le conteneur vers le niveau d'application UE (106),
le message d'Accusé de réception de requête de transfert (55) comprend une valeur mise à jour de la structure de données de zone à partir du RAN cible,
le RAN source étant en outre adapté pour
- transmettre (56) le message de Requête_Reconfiguration_Connexion_RRC avec la valeur mise à jour de la structure de données de zone à la strate d'accès UE (105), permettant à la valeur mise à jour de la structure de données de zone d'être transmise dans une commande AT (57) au niveau d'application UE.

7. Système comprenant un nœud d'accès radio, RAN (103), appelé RAN source, S-RAN, adapté pour interagir avec une entité d'opérations et de maintenance, OAM (102), et un autre RAN, appelé RAN cible (104), T-RAN, et une entité d'utilisateur, UE, le RAN source et le RAN cible étant adaptés pour interagir avec l'Entité d'utilisateur, UE, comprenant une Strate d'accès UE (105) et un niveau d'application UE (106), le RAN source étant en outre adapté pour
- utiliser une Structure de données de zone (withinArea) permettant à l'UE de résoudre s'il est à l'intérieur ou à l'extérieur d'une zone ciblée, TA, d'un rapport de mesure de niveau d'application, permettant au niveau d'application UE (57) de démarrer une session d'enregistrement de mesure de QoE telle que spécifiée dans le fichier de configuration de mesure si l'UE est à l'intérieur de la Zone ciblée, TA, pour préparer un rapport QoE,
- recevoir (51) un message de requête de tâche QoE à partir de l'OAM, comprenant une zone ciblée, TA, et un Élément de conteneur avec un fichier de configuration de mesure,
- transmettre (52) un message de Contrôle de ressource radio RRC incluant des informations de PARAMÉTRAGE et une structure de données QoE, la structure de données QoE comprenant la Structure de données de zone, (withinArea),
- prendre part à une procédure de transfert et émettre (54) un message de Requête de transfert comprenant la Zone ciblée au RAN cible (104),
- recevoir un message d'Accusé de réception de requête de transfert (55) à partir du RAN cible,
- transmettre (56) un message de Requête_Reconfiguration_Connexion_RRC,
- permettre une transmission d'une commande au niveau d'application UE (57) pour démarrer une session d'enregistrement de mesure de QoE telle que spécifiée dans le fichier de configuration de mesure si l'UE est à l'intérieur de la Zone ciblée, TA, pour préparer un rapport QoE,
**caractérisé en ce que**
la structure de données QoE comprenant la structure de données de zone (withinArea) et en outre un Conteneur, permettant à la strate d'accès UE de réacheminer (53) la structure de données de zone et le conteneur vers le niveau d'application UE (106),
le message d'Accusé de réception de requête de transfert (55) comprend une valeur mise à jour de la structure de données de zone à partir du RAN cible,
le RAN source
- transmettant (56) le message de Requête_Reconfiguration_Connexion_RRC avec la valeur mise à jour de la structure de données de zone à la strate d'accès UE (105), permettant à la valeur mise à jour de la structure de données de zone d'être transmise dans une commande AT (57) au niveau d'application UE.
le procédé comprend en outre le RAN cible,
- transmettant le message d'Accusé de réception de requête de transfert (55).

8. Système selon la revendication 7, dans lequel l'UE étant adapté pour
- véhiculer une première commande AT (53) comprenant une structure de données de zone (withinArea) indiquant à une application si l'UE est à l'intérieur ou à l'extérieur d'une zone ciblée, TA, du rapport de mesure de niveau d'application pour l'application indiquée par un élément d'information de type de service de mesure d'application (<app-meas_service_type>) de la strate d'accès UE (105) vers le niveau d'application UE (106).

9. Système selon la revendication 8 comprenant en outre la strate d'accès UE (105) étant adaptée pour
- recevoir (56) un message de Requête_Reconfiguration_Connexion_RRC avec une valeur mise à jour de la structure de données de zone (withinArea) à partir du Nœud d'accès radio (T-RAN, 104) ;
- transmettre une commande AT au niveau d'application UE (57) comprenant la structure de données de zone (withinArea) mise à jour ;
le niveau d'application UE (106) étant adapté pour
- démarrer une session d'enregistrement de mesure de QoE telle que spécifiée dans un fichier de configuration de mesure si l'UE est à l'intérieur de la Zone ciblée, TA, et préparer un rapport QoE ;
- transmettre le rapport QoE à la strate d'accès UE (105) ;
la strate d'accès UE
- transférant le rapport QoE au RAN.
